# EUROPEAN PATENT SPECIFICATION

(11) **EP 4 294 880 B1**
(45) Date of publication and mention of the grant of the patent: **14.05.2025**
(21) Application number: 22708457.1
(22) Date of filing: 09.02.2022
(51) Int. Cl.: C09D 5/00, C09D 5/02

(54) **CURING INDICATOR PRINTING COATING**
DRUCKBESCHICHTUNG MIT HÄRTUNGSINDIKATOR
REVÊTEMENT D'IMPRESSION À INDICATEUR DE DURCISSEMENT

(30) Priority: 22.02.2021 EP 21158489
(43) Date of publication of application: 27.12.2023
(73) Proprietor: Actega Terra GmbH, 31275 Lehrte (DE)
(72) Inventor: CONRAD, Nils, 46483 Wesel (DE); KOPETZKI, Daniel, 46483 Wesel (DE); FANDRICH, Björn, 46483 Wesel (DE); KAMPHUIS, Frank, 46483 Wesel (DE)
(74) Representative: Altana IP Department
(86) International application number: PCT/EP2022/053080
(87) International publication number: WO 2022/175144

(56) References cited:
- EP-A1- 1 900 784
- WO-A1-2009/015476
- WO-A1-2020/046654
- US-A- 5 573 934
- US-A1- 2004 259 027

## Description

The invention concerns a coating composition, its use, a process for printing onto a moving substrate and an intermediate industrial print product.

Radiation-cured coatings are used as overprint varnishes. The advantages of printing with radiation-curing printing inks and coatings are rapid spontaneous polymerization after irradiation with a radiation source and the good printability of non-absorbent substrates. The corresponding radiation-cured technology has developed rapidly since these inks and coatings were introduced into the market, and much effort has been expended to develop oligomers and monomers with lower odor, better viscosities, better reactivity, and less potential for skin irritation. However, there is still the primary problem of incompletely cured ink and coating films which is especially relevant in connection with rapid printing processes. Components of an incomplete cured coating film can migrate through the printing substrate. A migration of coating components or blotting of ink is highly problematical especially e.g. in the food packaging field and cannot be accepted. Thus, the production of incomplete cured coating films in such printing processes typically means the generation of high amounts of printing waste. Especially unnoticed changes concerning the curing rate can lead to such quality problems that may require generally a new production. Mainly these failures are visible in the finished product or rather the postpress process and not while the printing production.

A possible solution might be to print with maximum lamp output to guarantee the curing of the coating film. However, this measurement is in practice not even absolutely reliable and typically leads to other disadvantages concerning the printing quality like yellowing of the coating for example Typically used medium pressure mercury lamps also show a degradation of light intensity with increasing lifetime. Therefore a coating that cured well, might not cure sufficiently after a while even at same machine and parameter settings due to the ageing of the lamp.

Thus, in order to avoid the said disadvantages control methods for determining or checking the curing of the printed ink and coating films have been developed. Such control methods are e.g. complicated spectroscopic based measuring methods which should enable the measurement of the change in absorption of acrylates in the near infrared or infrared region. Further corresponding observation systems are e.g. proposed in DE 102005011739 and in EP1839862. An infrared-sensitive composition is described in US20040259027. However, these control systems might be deemed as to be on the one hand relatively complex and on the other hand as to be not reliable enough for many printing systems.

Thus it is an object to the present invention to provide an economically simple and also reliable observation system showing sufficient hardening of radiation-curing printing coatings.

The solution to this object is a coating composition having an amine value of 6 - 90 mg KOH comprising:
i) from 40 - 97 wt.% of reactive compound (M) containing at least one free radically polymerizable double bond,
ii) from 2.5 - 20 wt.% of radical photoinitiator (R),
iii) amine compound (D) containing at least one amino group and
iv) non-photobleaching colored dye (C) which is able to react with free radicals under bleaching of its color, wherein

the wt.% is relative to the total weight of the composition,
(M) is different from (R); (R) is different from (D); and (C) is different from (R) and (M); and
the radical photoinitiator (R) contains species (of the so called type II photoinitiator) that are able to interact with amino groups in such a way that the generation of free radicals is activated when exposed to electromagnetic radiation.

The amine value is measured according to the procedure as described in ISO 25761:2014(E).

A non-photobleaching colored dye according to the present invention is a dye which does not bleach in the absence of free radicals in a coating formulation when exposed to electromagnetic radiation. For example methylene blue which exhibits an inherent photobleaching property in the presence of amines by photoreduction (i.e., they lose color merely upon irradiation, even in the absence of photoinitiators) is not a non-photobleaching dye according to the present invention. Photobleaching dyes do not provide a reliable indication that curing of the composition has actually occurred; they show only that the composition has been exposed to a wavelength of radiation to which the dye itself responds by changing color. Furthermore, such photobleaching dyes do not necessarily undergo irreversible reaction under the curing conditions utilized, and therefore do not exhibit a permanent color change.

In contrast thereto non-photobleaching dyes (C) provide after reaction with free radicals a permanent or substantially permanent color change.

(M) is different from (R) means that photoinitiators containing also at least one free radically polymerizable double bond should be subsumed to (R).

The amine compound (D) containing at least one amino group does not need to be different from (M) because there are also radical polymerizable species containing amino groups. However, (D) is different from (R) so that species containing amino groups are not subsumed to (R).

(C) is different from (R) and (M) means that species subsumed to (R) and/or (M) do not belong to (C).

The coating composition according to the present invention provides an economical simple and also reliable observation system showing sufficient hardening of radiation-curing. This observation system does not need additional analytical apparatuses because it is merely based on the human perception. Thus, the content of the non-photobleaching colored dye (C) in the coating composition is sufficient if said content is adapted according to the individual human perception. The bleaching of the dye (based on reaction with radicals) has to be deemed not only as a secure measure for radical generation but also as a reliable indication for a sufficient curing of the coating composition (based on free radical polymerisation).

According to a preferred embodiment the coating composition according to the present invention comprises:
i) 60 - 94 wt.% of (M) and
ii) 5 - 15 wt.% of (R).

Species of the reactive compound (M) contain at least one free radically polymerizable double bond so that they might be polymerized (reactive concerning radical polymerisation).

Typically at least 80 wt.-% of the species of (M) contain acryloyl groups.

Acryloyl groups (sometimes "only" defined as H₂C=CH-C(=O)-) are defined according to the present invention as to be ("the ester-type"): H₂C=CH-C(=O)-O-("acrylic acid ester function").

According to a preferred embodiment the coating composition according to the present invention has more than 2 mol/kg, preferably 3 - 8 mol/kg, acryloyl groups.

Typically, bifunctional acrylates are mainly used. However, in applications which need to have a low viscosity higher amounts of mono acrylates might be used. This is the case for inkjet formulations.

Some reactive components (M) which are commonly used as monomers include:
mono-functional monomers such as: alkyl methacrylate, tetrahydrofufuryl methacrylate, isodecyl methacrylate, 2(2-ethoxyethoxy) ethylacrylate, stearyl acrylate, tetrahydrofurfuryl acrylate, lauryl methacrylate, stearyl methacrylate, lauryl acrylate, 2-phenoxyethyl acrylate, 2-phenoxyethyl methacrylate, glycidyl methacrylate, isodecyl acrylate, isobornyl methacrylate, isooctyl acrylate, tridecyl acrylate, tridecyl methacrylate, caparolactone acrylate, ethoxylated nonyl phenol acrylate, isobornyl acrylate, polypropylene glycol monomethacrylate, hexadecyl acrylate, monomethoxy tripropylene glycol monoacrylate, monomethoxy neopentyl glycol propoxylate monoacrylate, B-carboxyethyl acrylate, and oxyethylated phenol acrylate;
di-functional monomers, such as: triethylene glycol dimethacrylate, ethylene glycol dimethacrylate, tetraethylene glycol dimethacrylate, polyethylene glycol dimethacrylate, 1,3 butylene glycol diacrylate, 1,4 butanediol diacrylate, 1,4 butanediol dimethacrylate, diethylene glycol diacrylate, diethylene glycol dimethacrylate, 1,6 hexanediol diacrylate, 1,6 hexanediol dimethacrylate, neopentyl glycol diacrylate, neopentyl glycol dimethacrylate, polyethylene glycol dimethacrylate, polyethylene glycol diacrylate, tetraethylene glycol diacrylate, triethylene glycol diacrylate, 1,3 butylene glycol dimethacrylate,dipropylene glycol diacrylate, tripopylene glycol diacrylate, polyethylene glycol diacrylate, ethoxylated bisphenol A dimethacrylate, ethoxylated bisphenol A diacrylate, propoxylated neopentyl glycol diacrylate, ethoxylated neopentyl glycol diacrylate, ethoxylated tripopylene glycol diacrylate, monomethoxy trimethylolpropane ethoxylate diacrylate;
tri-functional monomers, such as: tris (2-hydroxy ethyl) isocyanurate trimethacrylate, trimethylol propane triacrylate, trimethylol propane trimethacrylate, tris (2-hydroxy ethyl) isocyanurate triacrylate, ethoxylated trimethylol propane triacrylate, propoxylated glycerol triacrylate ditrimethylol propane triacrylate, pentaerythritol triacrylate, and propoxylated trimethylolpropane triacrylate; and, (4) multi-functional monomers, such as: pentaerythritol tetraacrylate, di-trimethylol propane tetraacrylate, dipentaerythritol pentaacrylate, ethoxylated pentaerythritol tetraacrylate, and pentaacrylate ester.

Other reactive components (M) that are not considered monomers are reactive oligomers selected typically from acrylated or methacrylated polyols. Examples include epoxy type acrylates such as Bisphenol A diglycidylether diacrylate, polyester acrylates and metharylates, urethane acrylates and methacrylates, dendrimeric acrylates and methacrylates, polyether acrylates and methacrylates, acrylated acrylics or amine-modified polyether acrylates.

Preferably at least 30 wt.-% of the contained species of (R), more preferably at least 60 wt.-% of the contained species of (R), are able to interact with amino groups in such a way that the generation of free radicals is activated when exposed to electromagnetic radiation (being a type II photoinitiator), where said species are preferably selected from the group consisting of benzophenone, substituted benzophenones, thioxanthones, anthraquinones, benzoylformate esters and camphorquinone.

For applications with food contact, e.g. food packaging boxes often polymer based photointiators are used, e.g. Omnipol BP^{®} (IGM), Omnipol TX^{®} (IGM), LoMiCure^{®} 450 (BCH Brühl) or Ebecryl^{®} P 39 (Allnex).

Type II photoinitiator is especially helpful if in rapid printing processes under the presence of oxygen the coating surface has to be cured sufficiently (oxygen is typically working as a polymerization inhibitor).

These type II photoinitiators are effective only in the presence of an amine (synergist). These amines might be considered as to be co-initiators with said type II. Especially benzophenone-amine combination takes care of the oxygen inhibition and, therefore, is a very effective photoinitiator for surface curing.

However, often there are two types of photoinitiators used. As describe above one photoinitiator (type II) is for surface cure to overcome atmospheric oxygen inhibition and the other photoinitiator (type I) is used to assist in deep or through cure (type I: photoinitiator breaks down in such a way that the generation of free radicals is activated when exposed to electromagnetic radiation).

Type I photoinitiators do have some potential for surface cure but according to the invention generally they are added for through-cure in combination with type II photoinitiator systems.

In a special embodiment at least 5 wt.-%, preferably at least 15 wt.-%, of the species of (R) are not able to interact with amino groups in such a way that the generation of free radicals is activated when exposed to electromagnetic radiation (being a type I photoinitiator), where said species are preferably selected from the group consisting of hydroxyacetophenones, alkylaminoacetophenones, benzil ketals, dialkoxyacetophenones, benzoin ethers, phosphine oxides and acyloximino esters.

Special practical examples for said type I are: alpha-hydroxyketones (Omnirad^{®} 1173 (IGM), Omnirad^{®} 184 (IGM), Omnirad^{®} 1173 (IGM), Omnirad^{®} 127 (IGM), Esacure ONE^{®} (IGM)), benzil dimethyl ketal (BDK) or phosphine oxide (Omnirad^{®} 819 (IGM), TPO-L, TPO, Omnipol^{®} TP (IGM)).

Typically, the coating composition according to the present invention has an amine value of 12 - 55 mg KOH. This relative high amine value is generally at least substantially provided by contained amine compound (D).

Normally, at least 60 wt.-% of the contained species of (D) contain tertiary amino groups, which are preferably selected from the group consisting of methyldiethanolamine, triethanolamine or polymers with tertiary amino groups.

It should be mentioned that added primary or secondary amines might react in a polymerization mixture with e.g. special monomers to tertiary amines (it is relevant which amines are contained in the coating mixture). Primary or secondary amines undergo an addition reaction with acrylate groups (Michael addition) and thus form a tertiary amine. Tertiary amines are generally the most efficient synergists for type II photoinitiators.

In practice the following amines might be used: methyl diethanol amine or triethanol amine or Esacure^{®} A 198 (IGM). However, as described above amines might be also included in polymerisable monomers/binder polymers - e.g.: amine modified polyetheracrylates (Ebecryl^{®} 7100 (Allnex), Laromer^{®} PO 8997 (BASF), Ebecryl^{®} P 116 (Allnex) or Craynor^{®} 381 (Sartomer)).

According to a preferred embodiment at least 60 wt.-% of the species of (C) are of the triphenyl methane type. Typically, the non-photobleaching colored dye (C) which is able to react with free radicals under bleaching of its color is represented by the triphenyl methane type.

Such dyes are generally very color intensive and comprise an extended conjugated (mesomeric electron) system containing a chromophore that is subject to effective, substantially permanent decoupling, such as by (radical generation caused) alkylation of the molecule, so as to cause substantially complete and irreversible loss of the perceived color.

A preferred species of said triphenyl methane type is "Crystal violet" (hexamethyl pararosaniline chloride).

Alternatives to the triphenyl methane type (which is preferred) might be diphenyl methane dye type, azo dye type and carotene dye type.

Normally, the coating composition according to the present invention only (exclusively) contains as colored dye: non-photobleaching colored dye (C) which is able to react with free radicals under bleaching of its color. The presence of other dye types would be a disadvantage concerning the perceptibility of the color bleaching.

Typically, in the coating composition according to the present invention the molar proportion of (R) to (C) is at least 100, preferably 150 - 1500. A corresponding proportion which is too low would not allow a complete bleaching in a rapid printing procedure. The dye serves as an indicator of the polymerization reaction.

The coating composition according to the present invention might contain at least 40 wt.% organic binder polymers each not provided by (M), (P), (D) and/ or (C) and optionally at least 40 wt.% solvents each not provided by (M), (P), (D) and/ or (C). However also inorganic components like fillers, matting agents and coating additives like silicones or defoamers might be contained.

The coating composition according to the present invention should be preferably suitable for using in a continuous printing process.

Typically the composition according to the present invention has a viscosity of 30 s (DIN 3 mm flow cup, 23 °C) - 100 s (DIN 6 mm flow cup, 23 °C) (measured according to DIN: EN ISO 2431:2020-02).

The present invention is furthermore directed to a process for printing onto a moving substrate having an image-receiving surface, comprising the steps of:
(a) providing a radiation receptive layer, at least partially covering said image-receiving surface,
(b) moving the image-receiving surface parallel to the radiation receptive layer according to the printing speed,
(c) treating the radiation receptive layer by electromagnetic radiation, wherein
the radiation receptive layer provided in step (a) contains or consists of a coating composition as described above.

Typically, in step (c) the electromagnetic radiation is performed by UV radiation, preferably by moving the receptive layer through a fixed radiation station so that exposure times of 0.02 - 2 s are provided.

Often, in step (a) the radiation receptive layer is applied to the substrate surface by direct printing, including by direct jetting.

Alternatively, in step (a) the radiation receptive layer is applied by indirect printing which is performed by offset printing, screen printing, flexographic printing and/or gravure printing.

Typically, the corresponding printing speed is 10 - 500 m/min.

Normally, the radiation receptive layer provided in step (i) has a thickness between 0.5 µm and 500 µm, where the thickness is determined via gravimetry.

The invention also relates to an intermediate industrial print product which is producible by a process as described above.

Additionally, the present invention is also directed to the use of a coating composition as described above as a curing indicator in a printing process.

The present invention is further described below by using examples.

### Examples

### Example 1

A radiation curing coating composition was formulated by mixing the following raw materials in the indicated amounts:

| **Raw material** | **Weight percenta ge** | **Weight percenta ge** | **Weight percenta ge** | **Weight percenta ge** | **Weight percenta ge** |
|---|---|---|---|---|---|
| | **Composi tion 1.1** | **Composi tion 1.2** | **Composi tion 1.3** | **Composi tion 1.4** | **Composi tion 1.5** |
| 4,4'-Isopropylidenediph enol, oligomeric reaction products with 1-chloro-2,3-epoxypropane, esters with acrylic acid in 40% tripropylene glycol diacrylate | 40% | 40% | 40% | 40% | 40% |
| Propoxylated glycerin triacrylate (GPTA) | 25% | 25% | 25% | 31% | 31% |
| Dipropylene glycol diacrylate (DPGDA) | 23,4% | 23,4% | 23,4% | 23,4% | 23,4% |
| 2-Propenoic acid, 1,1'-[(1-methyl-1,2-ethanediyl)bis[oxy( methyl-2,1-ethanediyl)]] ester, reaction products with diethylamine | 5% | 5% | 5% | 5% | 5% |
| Defoamer (BYK 088) | 0,2% | 0,2% | 0,2% | 0,2% | 0,2% |
| Levelling Agent (BYK 3455) | 0,3% | 0,3% | 0,3% | 0,3% | 0,3% |
| Benzophenone | 6% | | 3% | | |
| Hydroxycyclohexyl phenyl ketone | | 6% | 3% | | |
| Crystal Violet | 0,1% | 0,1% | 0,1% | 0,1% | |
| Methylene blue | | | | | 0,1% |

The compositions 1.1, 1.2, 1.3 and 1.4 were characterized by a dark color and a viscosity in the range of 35-40 s (DIN 4 mm flow cup, according to ISO 53211).

2-Propenoic acid, 1,1'-[(1-methyl-1,2-ethanediyl)bis[oxy(methyl-2,1-ethanediyl)]] ester, reaction products with diethylamine is an acrylated, thus reactive, amine compound with an amine value of around 240 mg KOH. The compositions 1.1, 1.2, 1.3, 1.4 and 1.5 are thus characterized by an amine value of 12 mg KOH.

The total content of reactive compounds M (4,4'-Isopropylidenediphenol, oligomeric reaction products with 1-chloro-2,3-epoxypropane, esters with acrylic acid in 40% tripropylene glycol diacrylate, GPTA, DPGDA and 2-Propenoic acid, 1,1'-[(1-methyl-1,2-ethanediyl)bis[oxy(methyl-2, 1-ethanediyl)]] ester, reaction products with diethylamine) is 93,4% for Compositions 1.1, 1.2 and 1.3 and 99,4% for Compositions 1.4 and 1.5 respectively. Benzophenone and hydroxycyclohexyl phenyl ketone act as a radical initiator upon irradiation with electromagnetic radiation in the UV range.

All compositions were applied onto a primed cardboard with a Mayer rod applying a coating thickness of 10 µm. Afterwards the samples were cured with an undoped medium pressure mercury lamp (120 W/cm) under a conveyor belt with a belt speed of 10 m/min. Colour before and after curing was measured with a BYK Spectro Guide and the DE recorded against a colourless reference composition without Crystal Violet. DE is thus a good measure of colour intensity.

The uncured coatings were violet and colour was optically well visible with the eye. DE measured was in the range of 6-8.

All compositions except for Compositions 1.4 and 1.5 cured under irradiation with the medium pressure mercury lamp as described above.

Composition 1.4 did not show any significant decrease in colour intensity upon irraditation, since crystal violet is a non-photobleaching dye. In contrast Composition 1.5 showed a bleaching of the blue colour, since a photoreduction of the dye happens.

Composition 1.1, 1.2 and 1.3 showed a bleaching of their colour. In the case of Composition 1.1 and 1.3 the colour faded to nearly colourless, meaning to a DE < 1. Composition 1.2 retained some colour with DE = 3, that decreased to DE < 1 after several passages under the medium pressure mercury lamp irradiation.

Composition 1.3 was applied as described before and irradiated at different irradiation times by variation of the conveyor belt speed. Conveyor belt speed was adjusted from 10 m/min to 120 m/min in steps of 10 m/min. After irradiation the DE was recorded. With increasing speed, meaning shorter irradiation times, DE increased as well as shown in the table below.

| Cure speed | DE measured |
|---|---|
| 10 m/min | 0,25 |
| 20 m/min | 0,36 |
| 30 m/min | 0,7 |
| 40 m/min | 0,84 |
| 50 m/min | 0,98 |
| 60 m/min | 1,22 |
| 80 m/min | 1,79 |
| 100 m/min | 2,22 |
| 120 m/min | 2,52 |
| no curing | 6,62 |

The coating cured sufficiently up to a speed of 50 m/min. At higher speeds the varnish showed some tackiness, indicating an insufficient cure.

### Example 2

Composition 2.1 was formulated as indicated below.

| **Raw material** | **Weight percentage** |
|---|---|
| | **Composition 2.1** |
| Propoxylated glycerin triacrylate (GPTA) | 88,9% |
| 2,2'-methyliminodiethanol (MDEA) | 5% |
| Benzophenone | 6% |
| Crystal Violet | 0,1% |

The mixture was characterized by a dark colour and a visosity of 30 s (DIN 4 mm flow cup, according to ISO 53211). GPTA serves as reactive compound M. MDEA is an tertiary amine compound (D). Benzophenone it the radical photoinitiator (R) and Crystal Violet a non-photobleaching dye (C).

The amine value of Composition 2.1 was determined to be 23 mg KOH. The coating has a density of acryloyl groups of 6,2 mol/kg, originating from the GPTA. The molar ratio of radical photoinitiator (R) to non-photobleaching dye (C) was 135:1.

When applied at 10 µm and cured under an undoped medium pressure mercury lamp (120 W/cm) at 40 m/min, the initial violet colour of the coating faded to colourless.

### Example 3

A radiation curing coating composition was formulated by mixing the following raw materials in the indicated amounts:

| **Raw material** | **Weight percentage** | **Weight percentage** |
|---|---|---|
| | **Composition 3.1** | **Composition 3.2** |
| 4,4'-Isopropylidenediphen ol, oligomeric reaction products with 1-chloro-2,3-epoxypropane, esters with acrylic acid in 40% tripropylene glycol diacrylate | 42% | 43% |
| Propoxylated glycerin triacrylate (GPTA) | 25% | 25% |
| Dipropylene glycol diacrylate (DPGDA) | 23,4% | 23,4% |
| 2-Propenoic acid, 1,1'-[(1-methyl-1,2-ethanediyl)bis[oxy(me thyl-2,1-ethanediyl)]] ester, reaction products with diethylamine | 3% | 2% |
| Defoamer (BYK 088) | 0,2% | 0,2% |
| Levelling Agent (BYK 3455) | 0,3% | 0,3% |
| Benzophenone | 6% | |
| Hydroxycyclohexyl phenyl ketone | | 6% |
| Crystal Violet | 0,1% | 0,1% |

The compositions 3.1 and 3.2 were characterized by a dark color and a viscosity in the range of 35-40 s (DIN 4 mm flow cup, according to ISO 53211).

2-Propenoic acid, 1,1'-[(1-methyl-1,2-ethanediyl)bis[oxy(methyl-2,1-ethanediyl)]] ester, reaction products with diethylamine is an acrylated amine synergist with an amine value of 240 mg KOH. The compositions 3.1 is thus characterized by an amine value of 7,2 mg KOH. The compositions 3.2 is thus characterized by an amine value of 4,8 mg KOH. 3.2 has a too low amine value to achieve sufficient bleaching of the colour when cured at typical speeds of printing presses, while the amine value of 3.1 is at the lower limit to achieve sufficiently fast discolouration.

All compositions were applied onto a primed cardboard with a Mayer rod applying a coating thickness of 10 µm. Afterwards the samples were cured with an undoped medium pressure mercury lamp (120 W/cm) under a conveyor belt. Colour before and after curing was measured with a BYK Spectro Guide and the DE recorded against a colourless reference composition without Crystal Violet. DE is thus a good measure of colour intensity.

| **Cure state** | **Delta E** | **Delta E** |
|---|---|---|
| | **Composition 3.1** | **Composition 3.2** |
| Not Cured | 8,16 | 9,93 |
| Too low cured (at 120 m/min) | 3,04 | 4,23 |
| Well Cured (at 40 m/min) | 0,54 | 2,55 |
| Strongly cured (at 10 m/min) | 0,23 | 2,37 |

Composition 3.1 and 3.2 showed a bleaching of their colour. In the case of Composition 3.1 the colour faded to nearly colourless, meaning to a DE < 1. Composition 3.2 retained some colour with DE = 2 even when cured at 10 m/min.

### Example 4

An overprint varnish was formulated as shown in the table for Composition 4.1

| **Raw material** | **Weight percentage** |
|---|---|
| | **Composition 4.1** |
| Tripropylene glycol diacrylate (TPGDA) | 5 |
| 4,4'-Isopropylidenediphenol, oligomeric reaction products with 1-chloro-2,3-epoxypropane, esters with acrylic acid in 40% tripropylene glycol diacrylate | 32,5 |
| Propoxylated glycerin triacrylate (GPTA) | 21,5 |
| Propylidynetrimethanol, ethoxylated, esters with acrylic acid (TMPEOTA) | 20,7 |
| 2-Propenoic acid, 1,1'-[(1-methyl-1,2-ethanediyl)bis[oxy(methyl-2,1-ethanediyl)]] ester, reaction products with diethylamine | 4 |
| Acrylated Amine (Ebecryl 7100) | 7 |
| Defoamer (BYK 088) | 0,5 |
| Benzophenone | 6 |
| Hydroxycyclohexyl phenyl ketone | 1 |
| Levelling Agent (BYK 3455) | 0,8 |
| Acid blue 3 | 0,03 |

The composition 4.1 was characterized by a dark color and a viscosity in the range of 35-40 s (DIN 4 mm flow cup, according to ISO 53211).

2-Propenoic acid, 1,1'-[(1-methyl-1,2-ethanediyl)bis[oxy(methyl-2,1-ethanediyl)]] ester, reaction products with diethylamine and Ebecryl 7100 serve as acrylated amine synergists with an amine value of around 240 mg KOH and 135 mg KOH respectively. The total amine value of the composition 4.1 was determined to be 19 mg KOH.

The total content of reactive compounds (TPGDA, 4,4'-Isopropylidenediphenol, oligomeric reaction products with 1-chloro-2,3-epoxypropane, esters with acrylic acid in 40% tripropylene glycol diacrylate, GPTA, TMPEOTA, 2-Propenoic acid, 1,1'-[(1-methyl-1,2-ethanediyl)bis[oxy(methyl-2,1-ethanediyl)]] ester, reaction products with diethylamine and Ebecryl 7100) is 90,7%. Benzophenone and hydroxycyclohexyl phenyl ketone act as a radical initiator upon irradiation with electromagnetic radiation in the UV range.

When applied at 4 µm with a Mayer rod the composition 4.1 had a blue colour. Only when cured sufficiently under a UV lamp, the colour changed to colourless. When cured insufficiently, meaning the surface of the coating was still tacky, a bluish colour remained. The composition 4.1 could thus be used as an cure indicator.

### Example 5

Coating Composition 4.1 was used as an overprint varnish applied from a flexo coating unit in an offset press (manroland 700, Coating unit: doctor chamber blade). The printing machine was equipped with 3 medium pressure mercury UV lamps at a power of 160 W/cm, that could be switched on and off individually. The coating 4.1 was applied with a hexagonal anilox of 17 cm³/m², transferring about 6 g/m² of coating. The varnish was applied on a white board.

Speed of the machine was ramped up to 10000 sheets/h and the UV dryers were completely switched off. No curing of the UV coating 4.1 happened and the colour was blue.

Then 1 UV lamp was switched on and the coating cured but was still tacky on the surface. The UV intensity was insufficient to cure the coating completely. The blue colour did not fade completely and a light blue was still visible.

Once 2 or 3 UV lamps were switched on, the coating cured well and the initial blue colour of the coating did bleach.

Ramping up the speed to 12000 sheets/h and switching all 3 UV lamps on, the coating still cured well and the initial blue colour of the coating did bleach.

### Example 6

A radiation curing coating composition was formulated by mixing the following raw materials in the indicated amounts:

| **Raw material** | **Weight percentage** |
|---|---|
| | **Composition 6.1** |
| Low viscosity polyester tetraacrylate (Ebecryl 810) | 25,85% |
| Pentaerythritol, ethoxylated, esters with acrylic acid (PPTTA) | 5% |
| Ethanol, 2-amino-, polymer with .alpha.-hydro-.omega.-[(1-oxo-2-propenyl)oxy]poly(oxy-1,2-ethanediyl) ether with 2-ethyl-2-(hydroxymethyl)-1,3-propanediol (3:1) | 20% |
| Low viscosity amine modified polyether acrylate | |
| Oligomer (Ebecryl LEO 10551) | 41,7% |
| Polymeric benzophenone photoinitiator (Omnipol BP) | 6,5% |
| 2-Hydroxy-4'-hydroxyethoxy-2-methylpropiophenone (Omnirad 2959) | 0,5% |
| Defoamer (BYK 088) | 0,4% |
| Acid blue 3 | 0,05% |

The composition 6.1 was characterized by a dark color and a viscosity in the range of 90-100 s (DIN 4 mm flow cup, according to ISO 53211). When cured, the formulation shows little migration and is suitable for packaging with indirect food contact

Ethanol, 2-amino-, polymer with .alpha.-hydro-.omega.-[(1-oxo-2-propenyl)oxy]poly(oxy-1,2-ethanediyl) ether with 2-ethyl-2-(hydroxymethyl)-1,3-propanediol (3:1) and EBECRYL LEO 10551 are amine modified polyether acrylates. The composition 6.1 had an amine value of 35,5 mg KOH.

Omnipol BP and Omnirad 2959 act as a radical initiator upon irradiation with electromagnetic radiation in the UV range. The Omnipol BP is a polymeric benzophenone photoinitiator.

A coating with composition 6.1 was applied with a 4 µm Mayer rod and cured with an undoped medium pressure mercury lamp (120 W/cm). Readings of DE compared to the reference coating without Acid blue 3 are shown in the table below.

| **Cure state** | **Delta E** |
|---|---|
| | **Composition 6.1** |
| Not Cured | 9,62 |
| Too low cured (at 120 m/min) | 3,15 |
| Well Cured (at 40 m/min) | 0,97 |
| Strongly cured (at 10 m/min) | 0,97 |

The coating shows a visible color in the uncured state. The DE value is above 9. If not cured completely, there is insufficient discoloration to DE=3. Only when sufficient curing has been achieved is the color shade barely visible. The value of DE drops below 1. The coating thus can be used as a cure indicator.

### Example 7

Composition 6.1 was applied in a flexo printing roll to roll machine (Ultra 200 Pro). The printing machine was equipped with a two roller coating unit and transferred about 5 g/m² of coating. The speed was set to 34 m/min and the coating cured with one UV medium pressure mercury lamp with 200 W/cm. Different white board were tested as substrate, namely CKB preprimed with waterbased coating, Avanta prima preprimed with waterbased coating and Makata silk preprimed with waterbased coating. The primer prevents the UV coating to penetrate into the substrate even at low machine speeds.

Composition 6.1 was then applied on the different substrates. Before curing the coating exhibited a blue colour. After curing on all boards the colour changed to colourless.

### Example 8

A radiation curing coating composition for Screen printing applications was formulated by mixing the following raw materials in the indicated amounts:

| **Raw material** | **Weight percentage** |
|---|---|
| | **Composition 8.1** |
| Dipropylene glycol diacrylate (DPGDA) | 8,2% |
| Trimethylolpropane triacrylate (TMPTA) | 7,4% |
| 4,4'-Isopropylidenediphenol, oligomeric reaction products with 1-chloro-2,3-epoxypropane, esters with acrylic acid in 40% tripropylene glycol diacrylate | 45% |
| Propoxylated glycerin triacrylate (GPTA) | 3,4% |
| 2-Propenoic acid, 1,1'-[(1-methyl-1,2-ethanediyl)bis[oxy(methyl-2,1-ethanediyl)]] ester, reaction products with diethylamine | 8% |
| Soybean oil, epoxidized, acrylate | 18% |
| Benzophenone | 6% |
| Hydroxycyclohexyl phenyl ketone | 1% |
| Levelling Agent (BYK 3455) | 2% |
| Defoamer (BYK 088) | 1% |
| Crystal Violet | 0,1% |

The composition 8.1 was characterized by a dark color and a viscosity of 90 s (DIN 6 mm flow cup, according to ISO 53211).

The composition 8.1 had an amine value of 19 mg KOH.

The composition was applied onto a primed cardboard with a 150/30 screen sieve. Afterwards the samples were cured with an undoped medium pressure mercury lamp (120 W/cm) under a conveyor belt with different belt speeds ranging from 10 m/min to 120 m/min. Colour before and after curing was measured with a BYK Spectro Guide and the DE recorded against a reference composition without Crystal Violet.

| **Cure state** | **Delta E** |
|---|---|
| | **Composition 8.1** |
| Not Cured | 13,39 |
| Too low cured (at 120 m/min) | 4,35 |
| Well Cured (at 40 m/min) | 0,96 |
| Strongly cured (at 10 m/min) | 0,82 |

The coating shows a clear color in the uncured state. The E value is above 10. If cured insufficiently at 120 m/min, there is insufficient discoloration to DE=4 and the surface of the coating is very tacky. Only when sufficient curing has been achieved is the color shade barely visible. The coating thus serves as a cure indicator.

### Example 9

A radiation curing coating composition for LED curing was formulated by mixing the following raw materials in the indicated amounts:

| **Raw material** | **Weight percentage** |
|---|---|
| | **Composition 9.1** |
| 4,4'-Isopropylidenediphenol, oligomeric reaction products with 1-chloro-2,3-epoxypropane, esters with acrylic acid in 40% tripropylene glycol diacrylate | 37% |
| Propoxylated glycerin triacrylate (GPTA) | 25% |
| Dipropylene glycol diacrylate (DPGDA) | 15,4% |
| 2-Propenoic acid, 1,1'-[(1-methyl-1,2-ethanediyl)bis[oxy(methyl-2,1-ethanediyl)]] ester, reaction products with diethylamine | 13% |
| Defoamer (BYK 088) | 0,2% |
| Levelling Agent (BYK 3455) | 0,3% |
| Diphenyl(2,4,6-trimethylbenzoyl)phosphine oxide (TPO) | 4% |
| 2-Isopropyl-9H-thioxanthen-9-one (ITX) | 1% |
| Benzophenone | 4% |
| Crystal Violet | 0,1% |

Amine value of the composition was determined to be 31 mg KOH. Diphenyl(2,4,6-trimethylbenzoyl)phosphine oxide (TPO), 2-Isopropyl-9H-thioxanthen-9-one (ITX) and benzophenone act as radical initiator upon irradiation.

The composition was applied onto a primed cardboard with a Mayer rod applying a coating thickness of 10 µm. Afterwards the samples were cured with a water-cooled UV LED lamp emitting at 385 nm with an intensity of 20 W/cm² at a speed of 10 m/min. After passage under the LED unit, the violet colour bleached and the composition cured.

### Example 10

A radiation curing coating composition suitable for direct jetting was formulated by mixing the following raw materials in the indicated amounts:

| **Raw material** | **Weight percentage** |
|---|---|
| | **Composition 10.1** |
| Dipropylene glycol diacrylate (DPGDA) | 81,1% |
| 2-Propenoic acid, 1,1'-[(1-methyl-1,2-ethanediyl)bis[oxy(methyl-2,1-ethanediyl)]] ester, reaction products with diethylamine | 10% |
| Benzophenone | 6% |
| Hydroxycyclohexyl phenyl ketone | 2% |
| Crystal Violet | 0,1% |

Viscosity was measured to be 15 s (DIN 4 mm flow cup @ 23 °C).

The composition 10.1 was characterized by a dark color and showed an amine value of 24 mg KOH.

The total content of reactive compounds (DPGDA and 2-Propenoic acid, 1,1'-[(1-methyl-1,2-ethanediyl)bis[oxy(methyl-2,1-ethanediyl)]] ester, reaction products with diethylamine) is 91,1%. Benzophenone and hydroxycyclohexyl phenyl ketone act as a radical initiator upon irradiation with electromagnetic radiation in the UV range.

When applied with a 10 µm Mayer rod, the coating showed a violet colour. Upon curing with an undoped medium pressure mercury lamp of 120 W/cm at a speed of 10 m/min a bleaching of the violet colour appeared.

### Example 11

A radiation curing coating composition was formulated by mixing the following raw materials in the indicated amounts:

| **Raw material** | **Weight percentage** | **Weight percentage** | **Weight percentage** | **Weight percentage** |
|---|---|---|---|---|
| | **Composition 11.1** | **Composition 11.2** | **Composition 1.3** | **Composition 11.3** |
| 4,4'-Isopropylidened iphenol, oligomeric reaction products with 1-chloro-2,3-epoxypropane, esters with acrylic acid in 40% tripropylene glycol diacrylate | 40% | 40,05% | 40% | 40,05% |
| Propoxylated glycerin triacrylate (GPTA) | 25% | 25% | 25% | 25% |
| Dipropylene glycol diacrylate (DPGDA) | 23.4% | 23.4% | 23.4% | 23.4% |
| 2-Propenoic acid, 1,1'-[(1-methyl-1,2-ethanediyl)bis[o xy(methyl-2,1-ethanediyl)]] ester, reaction products with diethylamine | 5% | 5% | 5% | 5% |
| Defoamer (BYK 088) | 0.2% | 0.2% | 0.2% | 0.2% |
| Levelling Agent (BYK 3455) | 0.3% | 0.3% | 0.3% | 0.3% |
| Benzophenone | 3% | 3% | 3% | 3% |
| Hydroxycyclohe xyl phenyl ketone | 3% | 3% | 3% | 3% |
| Victoria blue B | 0.1% | | | |
| Basic Violet 2 | | 0.05% | | |
| Crystal Violet | | | 0.1% | |
| Acid blue 3 | | | | 0.05% |

The compositions 11.1, 11.2, 11.3 and 1.3 were characterized by a dark color and a viscosity in the range of 35-40 s (DIN 4 mm flow cup, according to ISO 53211). The compositions 11.1 and 11.4 are coloured blue. The compositions 11.2 and 11.3 are coloured violet.

The compositions 11.1, 11.2, 11.3 and 1.3 all have an amine value of 12 mg KOH.

Benzophenone and Hydroxycyclohexyl phenyl ketone act as a radical initiator upon irradiation with electromagnetic radiation in the UV range. The concentration of photoinitiator type 1 (Hydroxycyclohexyl phenyl ketone) and photoinitiator type 2 (Benzophenone) are each 3% in the formulations 11.1, 11.2, 11.3 and 1.3.

All compositions were applied onto a primed cardboard with a Mayer rod applying a coating thickness of 10 µm. Afterwards the samples were cured with an undoped medium pressure mercury lamp (120 W/cm) under a conveyor belt with a belt speed of 10 m/min. Colour before and after curing was measured with a BYK Spectro Guide and the DE recorded against a colourless reference composition without the corresponding dye (Victoria blue B, Basic Violet 2, Crystal Violet, Acid blue 3).

| **Cure state** | **Delta E** | **Delta E** | **Delta E** | **Delta E** |
|---|---|---|---|---|
| | **Composition 11.1** | **Composition 11.2** | **Composition 1.3** | **Composition 11.3** |
| Not Cured | 15,51 | 7,88 | 6,62 | 5,06 |
| Too low cured (at 120 m/min) | 6,14 | 5,09 | 2,52 | 2,70 |
| Well Cured (at 40 m/min) | 0,71 | 0,73 | 0,84 | 0,96 |
| Strongly cured (at 10 m/min) | 0,33 | 0,26 | 0,25 | 0,39 |

All dyes show a clear color in the uncured state. The DE value is above 5. In the insufficiently cured state, there is insufficient discoloration to DE=2. A colour is still visible in these cases. Only when sufficient curing has been achieved is the color shade barely visible. The value drops below DE=1.

### Example 12

A radiation curing coating composition was formulated by mixing the following raw materials in the indicated amounts:

| **Raw material** | **Weight percentage** | **Weight percentage** |
|---|---|---|
| | **Composition 1.1** | **Composition 12.1** |
| 4,4'-Isopropylidened iphenol, oligomeric reaction products with 1-chloro-2,3-epoxypropane, esters with acrylic acid in 40% tripropylene glycol diacrylate | 40% | 30% |
| Propoxylated glycerin triacrylate (GPTA) | 25% | 24,5% |
| Dipropylene glycol diacrylate (DPGDA) | 23.4% | 23.4% |
| 2-Propenoic acid, 1,1'-[(1-methyl-1,2-ethanediyl)bis[o xy(methyl-2,1-ethanediyl)]] ester, reaction products with diethylamine | 5% | 5% |
| Defoamer (BYK 088) | 0.2% | 0.2% |
| Levelling Agent (BYK 3455) | 0.3% | 0.3% |
| Benzophenone | 6% | 6% |
| Dispersing Agent (Disperbyk 2155) | | 2% |
| Matting agent (Acematt OK412) | | 8,5% |
| Crystal Violet | 0.1% | 0.1% |

1.1 is a glossy UV coating formulations whereas 12.1 is a matt UV coating.

The compositions 1.1 and 12.1 both have an amine value of 12 mg KOH.

All compositions were applied onto a primed cardboard with a Mayer rod applying a coating thickness of 10 µm. Afterwards the samples were cured with an undoped medium pressure mercury lamp (120 W/cm) under a conveyor belt with a belt speed of 10 m/min. Colour before and after curing was measured with a BYK Spectro Guide and the DE recorded against a colourless reference composition without Crystal Violet. DE is thus a good measure of colour intensity.

| **Cure state** | **Delta E** | **Delta E** |
|---|---|---|
| | **Composition 1.1** | **Composition 12.1** |
| Not Cured | 5,95 | 5,93 |
| Too low cured (at 120 m/min) | 2,41 | 2,14 |
| Well Cured (at 40 m/min) | 0,57 | 0,44 |
| Strongly cured (at 10 m/min) | 0,28 | 0,33 |

The gloss and matt UV coating show the same visible color in the uncured state. The E value is above 5. Only when sufficient curing has been achieved is the color shade barely visible. The value drops below DE=1. Colour of both coatings bleaches under the same conditions.

### Example 13

A radiation curing composition 13.1 was formulated as indicated below.

| **Raw material** | **Weight percentage** |
|---|---|
| | **Composition 13.1** |
| Low viscosity polyester tetraacrylate (Ebecryl 810) | 25,8% |
| Pentaerythritol, ethoxylated, esters with acrylic acid (PPTTA) | 5% |
| Ethanol, 2-amino-, polymer with .alpha.-hydro-.omega.-[(1-oxo-2-propenyl)oxy]poly(oxy-1,2-ethanediyl) ether with 2-ethyl-2-(hydroxymethyl)-1,3-propanediol (3:1) | 20% |
| Low viscosity amine modified polyether acrylate | |
| Oligomer (Ebecryl LEO 10551) | 41,7% |
| Poly(oxy-1,2-ethandiyl), α-(1-oxo-2-propenyl)-ω-(4-benzoylphenoxy)-(LoMiCure 450) | 6,5% |
| 2-Hydroxy-4'-hydroxyethoxy-2-methylpropiophenone (Omnirad 2959) | 0,5% |
| Defoamer (BYK 088) | 0,4% |
| Crystal Violet | 0,1% |

The composition 6.1 had an amine value of 35,5 mg KOH.

LomiCure 450 is a polymeric radical initiator that is acrylated and can thus be integrated into the coating via a free radical polymerization. Also Omnirad 2959 is a radical initiator. The total amount of radical photoinitiator (R) is 7%.

The total content of reactive compounds (M) is 92,5% since LoMiCure is counted as radical photoinitiator (R) and not as (M).

Crystal Violet is the non-photobleaching dye (C).

The composition 13.1 was applied onto a primed cardboard with a Mayer rod applying a coating thickness of 10 µm. Afterwards the samples were cured with an undoped medium pressure mercury lamp (120 W/cm) under a conveyor belt with a belt speed of 10 m/min. The initial violet blueish violet colour faded to colourless upon curing.

## Claims

1. A coating composition having an amine value of 6 - 90 mg KOH (measured according to ISO 25761:2014(E)) comprising:
i) from 40 - 97 wt.% of reactive compound (M) containing at least one free radically polymerizable double bond,
ii) from 2.5 - 20 wt.% of radical photoinitiator (R),
iii) amine compound (D) containing at least one amino group and
iv) non-photobleaching colored dye (C) which is able to react with free radicals under bleaching of its color, wherein
the wt.% is relative to the total weight of the composition,
(M) is different from (R); (R) is different from (D); and (C) is different from (R) and (M); and
the radical photoinitiator (R) contains species that are able to interact with amino groups in such a way that the generation of free radicals is activated when exposed to electromagnetic radiation.

2. A coating composition according to claim 1, comprising:
i) 60 - 94 wt.% of (M) and
ii) 5 - 15 wt.% of (R).

3. A coating composition according to claim 1 or 2, in which at least 80 wt.-% of the species of (M) contain acryloyl groups.

4. A coating composition according to one of the claims 1 to 3 having more than 2 mol/kg, preferably 3 - 8 mol/kg, acryloyl groups.

5. A coating composition according to one of the claims 1 to 4, in which at least 30 wt.-% of the species of (R), preferably at least 60 wt.-% of the species of (R), are able to interact with amino groups in such a way that the generation of free radicals is activated when exposed to electromagnetic radiation (being a type II photoinitiator), where said species are preferably selected from the group consisting of benzophenone, substituted benzophenones, thioxanthones, anthraquinones, benzoylformate esters and camphorquinone.

6. A coating composition according to one of the claims 1 to 5, in which at least 5 wt.-%, preferably at least 15 wt.-%, of the species of (R) are not able to interact with amino groups in such a way that the generation of free radicals is activated when exposed to electromagnetic radiation (being a type I photoinitiator), where said species are preferably selected from the group consisting of hydroxyacetophenones, alkylaminoacetophenones, benzil ketals, dialkoxyacetophenones, benzoin ethers, phosphine oxides and acyloximino esters.

7. A coating composition according to one of the claims 1 to 6, having an amine value of 12 - 55 mg KOH.

8. A coating composition according to one of the claims 1 to 7, in which at least 60 wt.-% of the species of (D) contain tertiary amino groups, which are preferably selected from the group consisting of methyldiethanolamine, triethanolamine or polymers with tertiary amine groups.

9. A coating composition according to one of the claims 1 to 8, in which at least 60 wt.-% of the species of (C) are of the triphenyl methane type.

10. A coating composition according to one of the claims 1 to 9, which only (exclusively) contains as colored dye: non-photobleaching colored dye (C) which is able to react with free radicals under bleaching of its color.

11. A coating composition according to one of the claims 1 to 10, in which the molar proportion of (R) to (C) is at least 100, preferably 150 - 1500.

12. A coating composition according to one of the claims 1 to 11, optionally containing at least 40 wt.% organic binder polymers each not provided by (M), (P), (D) and/ or (C) and optionally at least 40 wt.% solvents each not provided by (M), (P), (D) and/ or (C).

13. A coating composition according to one of the claims 1 to 12, which is suitable for using in a continuous printing process, preferably having a viscosity of 30 s (DIN 3 mm flow cup, 23 °C) - 100 s (DIN 6 mm flow cup, 23 °C) (measured according to DIN: EN ISO 2431:2020-02).

14. A process for printing onto a moving substrate having an image-receiving surface, comprising the steps of:
(a) providing a radiation receptive layer, at least partially covering said image-receiving surface,
(b) moving the image-receiving surface parallel to the radiation receptive layer according to the printing speed,
(c) treating the radiation receptive layer by electromagnetic radiation, wherein
the radiation receptive layer provided in step (a) contains or consists of a coating composition according to one of the claims 1 - 13.

15. A process for printing onto a substrate according to claim 14, wherein in step (c) the electromagnetic radiation is performed by UV radiation, preferably by moving the receptive layer through a fixed radiation station so that exposure times of 0.02 - 2 s are provided.

16. A process for printing onto a substrate according to claim 14 or 15, wherein in step (a) the radiation receptive layer is applied to the substrate surface by direct printing, including by direct jetting.

17. A process for printing onto a substrate according to one of the claims 14 - 16, wherein in step (a) the radiation receptive layer is applied by indirect printing which is performed by offset printing, screen printing, flexographic printing and/or gravure printing.

18. A process for printing onto a substrate according to one of the claims 14 - 17, wherein the printing speed is 10 - 500 m/min.

19. A process for printing onto a substrate according to one of the claims 14 - 18, wherein, the radiation receptive layer provided in step (a) has a thickness between 0.5 µm and 500 µm, where the thickness is determined via gravimetry.

20. Intermediate industrial print product which is producible by a process according to claims 14 - 19.

21. Use of a coating composition according to one of the claims 1 - 13 as a curing indicator in a printing process.

## Patentansprüche

1. Beschichtungszusammensetzung mit einer Aminzahl von 6 - 90 mg KOH (gemessen gemäß ISO 25761:2014(E)), umfassend:
i) 40 - 97 Gew.-% reaktive Verbindung (M) mit mindestens einer radikalisch polymerisierbaren Doppelbindung,
ii) 2,5 - 20 Gew.-% radikalischen Photoinitiator (R),
iii) Aminverbindung (D), enthaltend mindestens eine Aminogruppe, und
iv) nicht photobleichender farbiger Farbstoff (C), der unter Bleichung seiner Farbe mit Radikalen reagieren kann, wobei
sich die Gew.-%-Angaben auf das Gesamtgewicht der Zusammensetzung beziehen,
(M) von (R) verschieden ist; (R) von (D) verschieden ist und (C) von (R) und (M) verschieden ist; und
der radikalische Photoinitiator (R) Spezies enthält, die mit Aminogruppen derart wechselwirken können, dass die Erzeugung von Radikalen bei Einwirkung von elektromagnetischer Strahlung aktiviert wird.

2. Beschichtungszusammensetzung nach Anspruch 1, umfassend:
i) 60 - 94 Gew.-% (M) und
ii) 5 - 15 Gew.-% (R).

3. Beschichtungszusammensetzung nach Anspruch 1 oder 2, wobei mindestens 80 Gew.-% der Spezies von (M) Acryloylgruppen enthalten.

4. Beschichtungszusammensetzung nach einem der Ansprüche 1 bis 3 mit mehr als 2 mol/kg, vorzugsweise 3 - 8 mol/kg, Acryloylgruppen.

5. Beschichtungszusammensetzung nach einem der Ansprüche 1 bis 4, wobei mindestens 30 Gew.-% der Spezies von (R), vorzugsweise mindestens 60 Gew.-% der Spezies von (R), mit Aminogruppen derart wechselwirken können, dass die Erzeugung von Radikalen bei Einwirkung von elektromagnetischer Strahlung aktiviert wird (ein Typ-II-Photoinitiator), wobei diese Spezies vorzugsweise aus der Gruppe bestehend aus Benzophenon, substituierten Benzophenonen, Thioxanthonen, Anthrachinonen, Benzoylformiatestern und Campherchinon ausgewählt sind.

6. Beschichtungszusammensetzung nach einem der Ansprüche 1 bis 5, wobei mindestens 5 Gew.-%, vorzugsweise mindestens 15 Gew.-%, der Spezies von (R) nicht mit Aminogruppen derart wechselwirken können, dass die Erzeugung von Radikalen bei Einwirkung von elektromagnetischer Strahlung aktiviert wird (ein Typ-I-Photoinitiator), wobei diese Spezies vorzugsweise aus der Gruppe bestehend aus Hydroxyacetophenonen, Alkylaminoacetophenonen, Benzilketalen, Dialkoxyacetophenonen, Benzoinethern, Phosphinoxiden und Acyloximinoestern ausgewählt sind.

7. Beschichtungszusammensetzung nach einem der Ansprüche 1 bis 6 mit einer Aminzahl von 12 - 55 mg KOH.

8. Beschichtungszusammensetzung nach einem der Ansprüche 1 bis 7, wobei mindestens 60 Gew.-% der Spezies von (D) tertiäre Aminogruppen enthalten, die vorzugsweise aus der Gruppe bestehend aus Methyldiethanolamin, Triethanolamin oder Polymeren mit tertiären Amingruppen ausgewählt sind.

9. Beschichtungszusammensetzung nach einem der Ansprüche 1 bis 8, wobei mindestens 60 Gew.-% der Spezies von (C) vom Triphenylmethan-Typ sind.

10. Beschichtungszusammensetzung nach einem der Ansprüche 1 bis 9, die als Farbstoff nur (ausschließlich) nicht photobleichenden farbigen Farbstoff (C), der unter Bleichung seiner Farbe mit Radikalen reagieren kann, enthält.

11. Beschichtungszusammensetzung nach einem der Ansprüche 1 bis 10, wobei das molare Verhältnis von (R) zu (C) mindestens 100, vorzugsweise 150 - 1500, beträgt.

12. Beschichtungszusammensetzung nach einem der Ansprüche 1 bis 11, gegebenenfalls enthaltend mindestens 40 Gew.-% organische Bindemittelpolymere, die jeweils nicht von (M), (P), (D) und/oder (C) bereitgestellt werden, und gegebenenfalls mindestens 40 Gew.-% Lösungsmittel, die jeweils nicht von (M), (P), (D) und/oder (C) bereitgestellt werden.

13. Beschichtungszusammensetzung nach einem der Ansprüche 1 bis 12, die zur Verwendung bei einem kontinuierlichen Druckverfahren geeignet ist, vorzugsweise mit einer Viskosität von 30 s (DIN-3-mm-Auslaufbecher, 23 °C) - 100 s (DIN-6-mm-Auslaufbecher, 23 °C) (gemessen nach DIN: EN ISO 2431:2020-02).

14. Verfahren zum Bedrucken eines sich bewegenden Substrats mit einer Bildempfangsoberfläche, umfassend die Schritte:
(a) Bereitstellen einer strahlungsaufnehmenden Schicht, die die Bildempfangsoberfläche zumindest teilweise bedeckt,
(b) Bewegen der Bildempfangsoberfläche parallel zu der strahlungsaufnehmenden Schicht gemäß der Druckgeschwindigkeit,
(c) Behandeln der strahlungsaufnehmenden Schicht mit elektromagnetischer Strahlung, wobei
die in Schritt (a) bereitgestellte strahlungsaufnehmende Schicht eine Beschichtungszusammensetzung nach einem der Ansprüche 1 - 13 enthält oder daraus besteht.

15. Verfahren zum Bedrucken eines Substrats nach Anspruch 14, wobei in Schritt (c) die elektromagnetische Strahlung mittels UV-Strahlung durchgeführt wird, vorzugsweise durch Bewegen der aufnehmenden Schicht durch eine feste Strahlungsstation, so dass Einwirkungszeiten von 0,02 - 2 s bereitgestellt werden.

16. Verfahren zum Bedrucken eines Substrats nach Anspruch 14 oder 15, wobei in Schritt (a) die strahlungsaufnehmende Schicht durch direktes Drucken, einschließlich durch direktes Strahlen, auf die Substratoberfläche aufgebracht wird.

17. Verfahren zum Bedrucken eines Substrats nach einem der Ansprüche 14 - 16, wobei in Schritt (a) die strahlungsaufnehmende Schicht durch indirekten Druck aufgebracht wird, der durch Offsetdruck, Siebdruck, Flexodruck und/oder Tiefdruck durchgeführt wird.

18. Verfahren zum Bedrucken eines Substrats nach einem der Ansprüche 14 - 17, wobei die Druckgeschwindigkeit 10 - 500 m/min beträgt.

19. Verfahren zum Bedrucken eines Substrats nach einem der Ansprüche 14 - 18, wobei die in Schritt (a) bereitgestellte strahlungsaufnehmende Schicht eine Dicke zwischen 0,5 µm und 500 µm aufweist, wobei die Dicke durch Gravimetrie bestimmt wird.

20. Technisches Druckzwischenprodukt, das durch ein Verfahren nach Ansprüchen 14 - 19 herstellbar ist.

21. Verwendung einer Beschichtungszusammensetzung nach einem der Ansprüche 1 - 13 als Härtungsindikator bei einem Druckverfahren.

## Revendications

1. Composition de revêtement ayant un indice d'amine de 6 à 90 mg de KOH (mesuré selon la norme ISO 25761:2014(E)) comprenant :
i) de 40 à 97 % en poids de composé réactif (M) contenant au moins une double liaison polymérisable par voie radicalaire libre,
ii) de 2,5 à 20 % en poids de photoinitiateur de radicaux (R),
iii) un composé amine (D) contenant au moins un groupe amino et
iv) un colorant coloré non photodécolorant (C) qui est capable de réagir avec des radicaux libres avec décoloration de sa couleur, dans laquelle
le % en poids est par rapport au poids total de la composition,
(M) est différent de (R) ; (R) est différent de (D) ; et (C) est différent de (R) et (M) ; et
le photoinitiateur de radicaux (R) contient des espèces capables d'interagir avec des groupes amino de telle sorte que la génération de radicaux libres est activée lorsqu'il est exposé à un rayonnement électromagnétique.

2. Composition de revêtement selon la revendication 1, comprenant :
i) 60 à 94 % en poids de (M) et
ii) 5 à 15 % en poids de (R).

3. Composition de revêtement selon la revendication 1 ou 2, dans laquelle au moins 80 % en poids de l'espèce de (M) contient des groupes acryloyle.

4. Composition de revêtement selon l'une des revendications 1 à 3, ayant plus de 2 moles/kg, de préférence 3 à 8 moles/kg, de groupes acryloyle.

5. Composition de revêtement selon l'une des revendications 1 à 4, dans laquelle au moins 30 % en poids de l'espèce de (R), de préférence au moins 60 % en poids de l'espèce de (R), sont capables d'interagir avec des groupes amino de telle sorte que la génération de radicaux libres est activée lorsqu'elle est exposée à un rayonnement électromagnétique (étant un photoinitiateur de type II), lesdites espèces étant de préférence choisies dans le groupe constitué par benzophénone, benzophénones substituées, thioxanthones, anthraquinones, esters de benzoylformiate et camphorquinone.

6. Composition de revêtement selon l'une des revendications 1 à 5, dans laquelle au moins 5 % en poids, de préférence au moins 15 % en poids, des espèces de (R) ne sont pas capables d'interagir avec des groupes amino de telle sorte que la génération de radicaux libres est activée lorsqu'elle est exposée à un rayonnement électromagnétique (étant un photoinitiateur de type I), lesdites espèces étant de préférence choisies dans le groupe constitué par hydroxyacétophénones, alkylaminoacétophénones, cétals de benzyle, dialcoxyacétophénones, éthers de benzoïne, oxydes de phosphine et esters d'acyloximino.

7. Composition de revêtement selon l'une des revendications 1 à 6, ayant un indice d'amine de 12 à 55 mg de KOH.

8. Composition de revêtement selon l'une des revendications 1 à 7, dans laquelle au moins 60 % en poids de l'espèce (D) contiennent des groupes amino tertiaires, qui sont de préférence choisis dans le groupe constitué par la méthyldiéthanolamine, la triéthanolamine ou des polymères avec des groupes amine tertiaire.

9. Composition de revêtement selon l'une des revendications 1 à 8, dans laquelle au moins 60 % en poids des espèces de (C) sont du type triphénylméthane.

10. Composition de revêtement selon l'une des revendications 1 à 9, qui contient seulement (exclusivement) comme colorant coloré : colorant coloré non photodécolorant (C) qui est capable de réagir avec des radicaux libres avec décoloration de sa couleur.

11. Composition de revêtement selon l'une des revendications 1 à 10, dans laquelle la proportion molaire de (R) sur (C) est d'au moins 100, de préférence de 150 à 1 500.

12. Composition de revêtement selon l'une des revendications 1 à 11, contenant éventuellement au moins 40 % en poids de polymères liants organiques chacun non fourni par (M), (P), (D) et/ou (C), et éventuellement au moins 40 % en poids de solvants chacun non fourni par (M), (P), (D) et/ou (C).

13. Composition de revêtement selon l'une des revendications 1 à 12, qui est appropriée pour être utilisée dans un procédé d'impression continue, ayant de préférence une viscosité de 30 s (DIN 3 mm coupe d'écoulement, 23 °C) à 100 s (DIN 6 mm coupe d'écoulement, 23 °C) (mesurée selon la norme DIN: EN ISO 2431:2020-02).

14. Procédé d'impression sur un substrat en mouvement ayant une surface réceptrice d'image, comprenant les étapes de :
(a) fourniture d'une couche réceptrice de rayonnement, recouvrant au moins partiellement ladite surface réceptrice d'image,
(b) déplacement de la surface réceptrice d'image parallèlement à la couche réceptrice de rayonnement selon la vitesse d'impression,
(c) traitement de la couche réceptrice de rayonnement par un rayonnement électromagnétique, dans lequel
la couche réceptrice de rayonnement fournie dans l'étape (a) contient ou est constituée d'une composition de revêtement selon l'une des revendications 1 à 13.

15. Procédé d'impression sur un substrat selon la revendication 14, dans lequel, dans l'étape (c), le rayonnement électromagnétique est effectué par rayonnement UV, de préférence en déplaçant la couche réceptrice à travers un poste de rayonnement fixe de sorte que des durées d'exposition de 0,02 à 2 s soient fournies.

16. Procédé d'impression sur un substrat selon la revendication 14 ou 15, dans lequel, dans l'étape (a), la couche réceptrice de rayonnement est appliquée sur la surface du substrat par impression directe, y compris par projection directe.

17. Procédé d'impression sur un substrat selon l'une des revendications 14 à 16, dans lequel, dans l'étape (a), la couche réceptrice de rayonnement est appliquée par impression indirecte qui est effectuée par impression offset, sérigraphie, impression flexographique et/ou impression par gravure.

18. Procédé d'impression sur un substrat selon l'une des revendications 14 à 17, dans lequel la vitesse d'impression est de 10 à 500 m/min.

19. Procédé d'impression sur un substrat selon l'une des revendications 14 à 18, dans lequel la couche réceptrice de rayonnement prévue dans l'étape (a) a une épaisseur comprise entre 0,5 µm et 500 µm, l'épaisseur étant déterminée par gravimétrie.

20. Produit d'impression industriel intermédiaire qui peut être produit par un procédé selon les revendications 14 à 19.

21. Utilisation d'une composition de revêtement selon l'une des revendications 1 à 13 comme indicateur de durcissement dans un procédé d'impression.
